# EUROPÄISCHE PATENTANMELDUNG

(11) **EP 0 877 184 A2**
(43) Veröffentlichungstag der Anmeldung: **11.11.1998**
(21) Anmeldenummer: 98108022.9
(22) Anmeldetag: 02.05.1998
(51) Int. Cl.: F16K 11/07

(54) **Mehrwegeventil**

(30) Priorität: 10.05.1997 DE 19719767
(71) Anmelder: IMI Norgren-Herion Fluidtronic GmbH & Co. KG, 70736 Fellbach (DE)
(72) Erfinder: Baldauf, Günter, 71394 Kernen (DE); Pflüger, Hans-Hoachim, Dipl.-Ing, 71701 Schwieberdingen (DE); Maier, Uwe, Dipl.-Ing, 71384 Weinstadt (DE)
(74) Vertreter: Otte, Peter, Dipl.-Ing.

(57) **Zusammenfassung**

Bei einem Mehrwegeventil mit mindestens einem Dichtmittel zwischen relativ zueinander beweglichen Teilen (Ventilgehäuse bzw. Ventilkolben), wobei das Dichtmittel aus einem vorzugsweise metallischen, starren Trägerring (15) und einem einstückigen vorzugsweise elastomeren ringförmigen, am Trägerring gelagerten Dichtelement (16) besteht, wird vorgeschlagen, den Trägerring so auszubilden, daß dieser einerseits die Halterung des Dichtmittels an dem Teil, an dem es stationär sitzt, sichert, wobei der Trägerring andererseits je nach seiner gehäuse- oder kolbenfesten Anordnung einen radial gerade oder schräg gerichteten, sich nach außen oder nach innen erstreckenden, umlaufenden Ringvorsprung (15c) aufweist, auf welchem das Dichtelement rittlings aufsitzt und diesen daher beidseitig umfassend gehalten ist.

## Beschreibung

Die Erfindung betrifft ein Mehrwegeventil mit mindestens einem Dichtmittel zwischen relativ zueinander beweglichen Teilen (Ventilgehäuse bzw. Ventilkolben) nach der Gattung des Anspruchs 1, wobei das Dichtmittel aus einem vorzugsweise metallischen, starren Trägerring und einem einstückigen, vorzugsweise elastomeren, am Trägerring gelagerten und mindestens eine sich radial erstreckende Dichtlippe bildenden Dichtelement besteht.

Mehrwegeventile dieser Art sind in einer Vielzahl von Ausführungsformen bekannt, wobei das Ventilgehäuse eine Ventilgehäuseausnehmung bildet, in welchem radial beabstandet ein Ventilkolben eine axiale Relativbewegung zum Ventilgehäuse durchführt, wodurch Ein- und Auslässe des Mehrwegeventils untereinander jeweils geöffnet bzw. verschlossen werden können. Es wird auf folgende Veröffentlichungen verwiesen, die weiter unten noch im einzelnen besprochen werden: CH-PS 600 202, US-PS 3 565 115, EP 0 584 480 A1, französisches Patent 73 22 554, DE 4 228 439 A1, DE 4 228 438 C1, US-PS 3 968 971, EP 0 579 896 A1, DE-OS 26 54 452, DE 4 027 520 A1, EP 0 475 070 B1.

Ferner sind Dichtringe, auch O-Ringe, insbesondere für Lagerabdichtungen bei Getriebegehäusen bekannt aus den US-PS'en 4 421 329, 3 123 367, 3 117 796, 3 306 622 und 3 603 602.

Aus den sich auf die Abdichtung zwischen Ventilgehäuse und Ventilkolben bei Mehrwegeventilen beziehenden Veröffentlichungen läßt sich allgemein entnehmen, daß der Ventilkolben durch üblicherweise identische, axial beabstandete Dichtringe gegenüber dem Ventilgehäuse abgedichtet und geführt ist, wobei die Dichtringe normalerweise ortsfest in der Bohrung des Ventilgehäuses gehalten sind, obwohl natürlich auch die umgekehrte Lösung denkbar und insoweit auch einen innerhalb des Rahmens der vorliegenden, noch zu beschreibenden Erfindung liegenden Gesichtspunkt darstellt, nämlich die Dichtringe auch stationär am Ventilkolben oder in dortigen Nutgründen aufzunehmen, so daß die Dichtringe insgesamt mit dem Ventilkolben verschoben werden und die Abdichtung im Außenringbereich in Verbindung mit der dortigen Gleitbewegung erfolgt.

So sind in dem Schweizer Patent CH-PS 600 202 mehrere, paketartig zusammengesetzte Ringdichtungen beschrieben, die in den Nutgrund einer radialen Ringnut eines der abzudichtenden Teile eingelegt und durch einen radial angeordneten O-Ring an das andere Teil gedruckt werden.

Die Ringdichtungen sind dabei elastisch federnd; eine Einzelmontage ist erforderlich.

Bei dem US-Patent 3 565 115 sind vierteilige, lose zusammengesteckte, Dichtringe bildende Ringscheiben vorgesehen, die durch angespritzte axiale Abstandsbolzen eine gegenseitige Lagefixierung erfahren und so in der Gehäusebohrung fixiert werden. Die Gesamtanordnung der Dichtungsringe ist zwischen zwei Sicherungsringen gehalten.

Eine häufig angewandte Lösung zur Lagefixierung und zum Aufbau von Dichtringen bei Mehrwegeventilen besteht bei den miteinander vergleichbaren Veröffentlichungen entsprechend französischer Patentschrift 73 22 554, der EP 0 584 480 A1, der DE 4 228 428 C1 und der DE 4 228 439 A1 darin, daß ein elastomerer, das ringförmige Dichtelement bildender Hauptkörper mit gummielastischen Eigenschaften von mit dem Ventilgehäuse einstückigen ringförmigen Haltevertiefungen aufgenommen ist, was einen eher aufwendigen Gehäuseaufbau bedingt. Zur Sicherung der Dichtwirkung kommt dabei der Querschnittskontur des so gelagerten elastomeren Dichtungsrings erhöhte Bedeutung zu. Nicht selten enthalten solche Dichtungsringe noch eingelagerte metallische Halte- oder Trägerringe, die von dem elastomeren Material auch völlig umschlossen sein können.

Eine im weiter vorn schon angesprochenen Sinne umgekehrte Lagerung der Dichtringe am Ventilkolben eines Mehrwegeventils laßt sich dem US-PS 3 968 971 (vgl. Fig. 8) entnehmen, wobei auf den Ventilkörper geschobene Abstandshalter zwischen sich elastomere Dichtringe aufnehmen und lagern, die über einen stark verkippbaren Lippenbereich zur Abdichtung verfügen und durch einen metallischen, sich in axialer Richtung erstreckenden Einlagerungsring die axialen Abstände sicherstellen.

Bei der aus der EP 0 579 896 A1 bekannten Schieberventilabdichtung ergibt sich ebenfalls eine kaskadenartige axiale Schichtung der einzelnen Ringdichtungen, die in ihrem Dichtungsbereich aus einem elastomeren Werkstoff bestehen, an den jeweils in axialer Richtung vorspringend ein aus einem anderen, beispielsweise metallischen, thermoplastischen oder duroplastischen Werkstoff bestehender Kragen angesetzt oder teilweise auch eingebettet ist, der die axiale Beabstandung der Dichtringe zueinander vorgibt und durch seine eigene Abstützung an dem elastomeren Dichtungsbereich für einen axialen Toleranzausgleich sorgt.

Bekannt ist ferner aus der DE-OS 26 54 452, ähnlich wie weiter vorn schon beschrieben, ein im Querschnitt rechteckiger, als schmale Ringscheibe aus festem Werkstoff ausgebildeter Stützkörper, der allseitig oder nahezu allseitig von einer aus elastischem Werkstoff bestehenden Ummantelung umgeben ist, die insbesondere auch symmetrisch zum Stützkörper ausgebildet sein kann und mit beidseitigen radialen äußeren Stirnflächen Dichtlippen bildet. Diese Dichtlippen dichten sowohl gegenüber der Gehäusebohrung als auch der Wandung des Ventilkolbens ab.

Eine weitere ringförmige Dichtungsanordnung entsprechend DE 40 27 520 A1 umfaßt zunächst ein im wesentlichen U-förmiges Dichtungsgehäuse in Ringgestalt, das aus zwei ineinander geschachtelten, L-förmigen Teilen zusammengesetzt sein kann. Dieses auf einer Seite offene Gehäuse nimmt einen ersten elastisch federnden Innenring und einen zweiten auf die Gehäuseöffnung gerichteten Außenring auf, der als Dichtelement dient. Das Dichtungsgehäuse, welches die beiden elastomeren Teilringe aufnimmt, kann dabei selbst im Preßsitz in der Kolbenaufnahme eines Ventilgehäuses ohne sonstige axiale Abstützung sitzen.

Schließlich ist aus der EP 0 475 070 A1 ebenfalls ein Mehrwegeventil bekannt, dessen Dichtungsanordnung zur Abdichtung des axial bewegbaren Ventilkolbens gegenüber dem Ventilgehäuse selbst wieder aus einem mehrteilig aufgebauten Dichtring besteht, der einen äußeren, im wesentlichen U-förmigen Gehäusering aus metallischem Material umfaßt, wobei der U-förmige Querschnitt jedenfalls so eingeschnürt ausgebildet ist, daß mindestens ein axial vorspringender umlaufender Haltevorsprung an einem in den Gehäusering eingelegten Dichtelement dieses zur unverlierbaren Halterung hintergreift. Die den Gehausering bildenden Teile sind dabei so zusammengefügt, daß sich zusammen mit dem elastomeren Dichtelement ein einheitliches Bauelement ergibt.

Durch die Anordnung solchermaßen zusammengesetzter Dichtringe in der Ventilgehäuseausnehmung (oder umgekehrt am Ventilkolben) werden die Dichtringe fixiert und dichten gleichzeitig durch den Preßsitz metallisch gegenüber dem Ventilgehäuse ab. Die Abdichtung gegenüber dem Ventilkolben erfolgt über das von dem U-förmigen Gehäusering aufgenommene elastomere Dichtelement. Dabei ist das Dichtelement von dem Gehäusering lediglich aufgenommen und formschlüssig gehalten, mit diesem jedoch nicht anderweitig verbunden.

Auf die in diesem Zusammenhang ebenfalls bekannten Wellenabdichtungen etwa bei Getriebegehäusen entsprechend den weiter vorn schon genannten US-Patentschriften braucht an sich nicht genauer eingegangen zu werden; sie bestehen sämtlich im wesentlichen aus einem elastomeren, ringförmig geschlossenen Dichtelement nach Art eines O-Ringes und einem eingelegten, metallischen Stütz- oder Trägerring, der auch eine in sich geschlossene Spiralfeder sein kann (US-PS 3 603 602), um so die O-Ringdichtung zu bilden, die bei zusätzlicher Einschichtung geeigneter axialer Abstandshalterungen auch für Mehrwegeventile verwendbar ist.

### Vorteile der Erfindung

Die Erfindung hat sich das Ziel gesetzt, einen Dichtring für Mehrwege- oder Schieberventile in besonders einfacher und insofern auch kostengünstiger Weise so auszubilden, daß nur zwei Dichtringteile jeweils erforderlich sind und dennoch sonst notwendige axiale Abstandshalter bei geringem Aufwand sowohl im Bereich der Bohrung des Ventilgehäuses als auch des Kolbens entfallen sowie eine einwandfreie Abdichtung bei größtmöglichen Durchflußmengen pro Zeiteinheit erreicht werden kann.

Die Erfindung erreicht dieses Ziel durch die kennzeichnenden Merkmale des Anspruchs 1, welches durch die Merkmale der Unteransprüche weiter gefördert wird, und hat die Vorteile, daß
- durch die Einhaltung eines strikt lediglich zweiteiligen Aufbaus des sich im Endeffekt einstückig darstellenden Dichtrings die Teileanzahl gering ist, so daß sich Kosten- und Prozeßvorteile ergeben, wobei
- es der Erfindung gelingt, sowohl eine formschlüssige als auch, falls gewünscht, zusätzlich eine stoffschlüssige Verbindung des elastomeren, also üblicherweise aus einem gummielastischen Werkstoff bestehenden Dichtelements mit dem üblicherweise aus einem metallischen Werkstoff bestehenden Trägerring sicherzustellen, obwohl dieser Trägerring aus einem Teil, also einstückig aufgebaut ist und hinsichtlich seiner Fertigung keine Hinterschneidungen, Ausnehmungen o.dgl. aufzuweisen braucht;
- dabei sitzt der das Dichtelement formschlüssig und/oder stoffschlüssig lagernde und haltende Trägerring dort, wo das elastomere Dichtelement der Gleitwirkung durch die Bewegung der gegeneinander abgerichteten Teile ausgesetzt ist, dient also als stützendes Innenteil, eingebettet in die elastomere Dichtmasse, und bildet ferner dort, wo der gesamte Dichtring stationär gehalten ist, mit einer Außenfläche eine metallische Dichtung gegenüber dem jeweiligen anderen Teil, üblicherweise gegenüber dem Ventilgehäuse;
- die formschlüssige Verbindung des Stützrings zum Dichtelement erfolgt durch axiale Aussparungen in einem radial vorspringenden Schenkel des Stützringes, der selbst eine allgemeine T-Form aufweist, wobei ferner
- zusätzlich durch Aufvulkanisieren des Dichtelements auf den Stützring eine stoffschlüssige Verbindung hergestellt wird. Hierzu bietet
- der Stützring eine Vielzahl von Außenflächen, nämlich die beiden Seitenflächen des radialen Schenkels, dessen Stirnfläche sowie die beiden inneren Ringflächen, die von den diametral gegenüberliegenden kleinen Schenkeln der T-Form gebildet sind. Hierdurch ist das elastomere Dichtelement absolut einwandfrei und zuverlässig gehalten, wobei
- das Dichtelement selbst über die Außenkante des radialen Schenkels des Stützringes vorspringt, an dieser Stelle eine oder mehrere Dichtlippen bilden oder eine allgemein konvex nach außen gewölbte Form aufweisen kann.

Es versteht sich und wird daher im folgenden auch nicht ständig wiederholt, daß eine Umkehrung der Anordnung des Dichtrings durch entsprechenden Sitz und Ausbildung der T-Form des Stützringes dann auf dem Ventilkolben möglich ist, wodurch ein außendichtendes System realisiert wird.

Durch die in den Unteransprüchen aufgeführten Maßnahmen sind vorteilhafte Weiterbildungen und Verbesserungen des im Anspruch 1 angegebenen Mehrwegeventils möglich. Besonders vorteilhaft ist hier, daß das elastomere Material des Dichtelements, welches lediglich in seinem Inneren durch den radialen Schenkel der T-Form des Stützringes fest gehalten ist, beliebigen Formgebungen im Außenbereich zugänglich ist; so kann beispielsweise durch Materialwegnahme ringförmig beidseitig im oberen Bereich die Dichtlippenkontur betont und elastisch gehalten werden. Hierdurch können die von dem Mehrwegeventil zu schaltenden, unter Druck stehenden Medien selbst die Dichtwirkung durch entsprechende Einwirkungen jeweils von der Seite, an welcher sie sich befinden, zusätzlich unterstützen.

Vorteilhaft ist ferner die Ausbildung des den Stützring bildenden starren Trägerteils für das Dichtelement als einstückiges Blech-Zierteil bei besonderer Kostengünstigkeit.

### Zeichnung

Ausführungsbeispiele der Erfindung sind in der Zeichnung dargestellt und werden in der nachfolgenden Beschreibung näher erläutert. Es zeigen:
- Fig. 1: schematisiert den Aufbau eines Mehrwegeventils im Längsschnitt mit mehreren Dichtringen, wobei sonstige Abschluß- oder Betätigungseinrichtungen weggelassen sind;
- Fig. 2: eine mögliche Ausführungsform eines solchen Dichtrings im Querschnitt, also längs einer sich im Mehrwegeventil erstreckenden axialen Schnittebene, und
- Fig. 3: den gleichen Dichtring im Längsschnitt, d.h. längs einer sich im Mehrwegeventil erstreckenden radialen Schnittebene, wobei die
- Fig. 4 und 5: eine Variante eines Dichtrings in der gleichen Schnittabfolge zeigen, während die
- Fig. 6 und 7: weitere Varianten darstellen in kostengünstiger Ausbildung des starren Trägerteils als Blechziehteil.

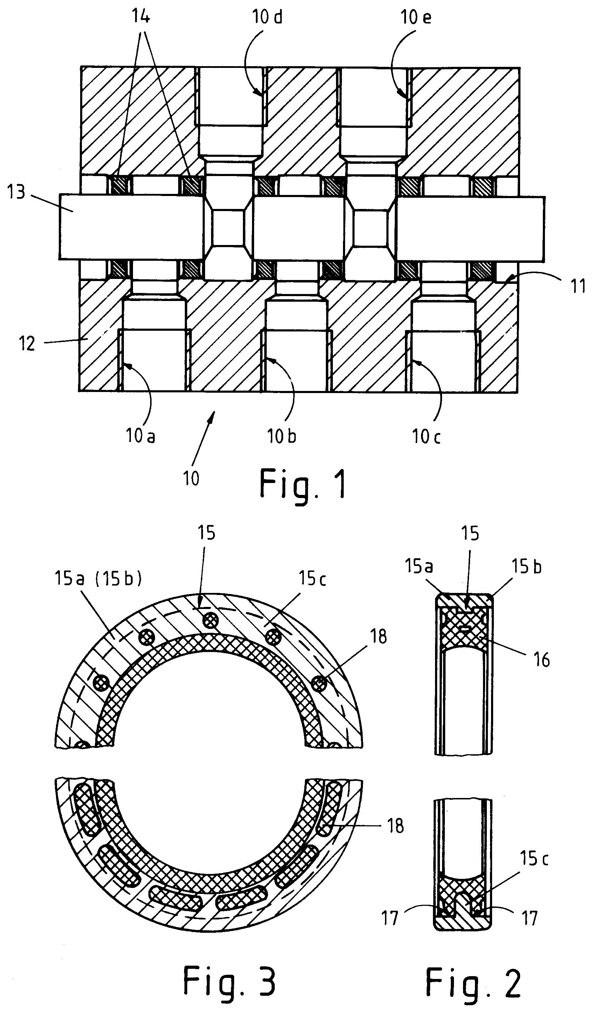

Das in Fig. 1 abgebildete Mehrwegeventil 10, bei dem dargestellten Ausführungsbeispiel mit insgesamt fünf Ein- bzw. Auslässen in Form von Ventilkanälen 10a bis 10e, beispielsweise 5/3-Wegeventil, lagert in einer Ventilgehäusebohrung oder Ventilgehäuseaussparung 11 eines Ventilgehäuses 12 einen Ventilschieber oder Ventilkolben 13. Nicht dargestellte Betätigungsmittel bewirken eine relative Axialverschiebung zwischen der Ventilgehäuseaussparung 11 und dem Ventilkolben 13, so daß die verschiedenen Ventilkanäle miteinander verbindbar bzw. gegeneinander absperrbar sind. Üblicherweise sind die Ausnehmungen im Ventilgehäuse sowie der Ventilkolben im Querschnitt kreisförmig, so daß auch die entsprechenden Ringdichtungen kreisförmig ausgebildet sind; es versteht sich aber, daß bei Beibehaltung der erfindungsgemäßen Grundkonzeption auch sonstige beliebige Querschnittsformen realisiert werden können.

Dabei wird der Ringraum zwischen Ventilgehäuseausnehmung einerseits und Ventilkolben andererseits, über den je nach Kolbenstellung die verschiedenen vorhandenen Ventilkanäle fluidisch miteinander verbunden oder voneinander abgetrennt werden, mittels Ringdichtungen 14, die alle den gleichen Aufbau aufweisen können, abgedichtet. Diese Ringdichtungen sind strikt aus lediglich zwei Teilen aufgebaut, nämlich aus einem in seinem Querschnitt mindestens einen sich im wesentlichen in radialer Richtung erstreckenden Schenkel oder Ringvorsprung aufweisenden starren Trägerteil, vorzugsweise aus Metall, und aus einem mit diesem untrennbar, weil kraft- und vorzugsweise auch formschlüssig verbundenen elastomeren oder aus einem sonstigen gummielastischen Material bestehenden Dichtelement.

Es sind üblicherweise mehrere solcher Ringdichtungen vorhanden, je nach Ausbildung des Mehrwegeventils, die vorzugsweise in ihrem Aufbau identisch ausgebildet sind, so, wie dies in den Figuren 2 und 3 bzw. 4 und 5 genauer dargestellt ist.

Die Grundform des starren, vorzugsweise metallischen, gegebenenfalls aber auch aus einem sonstigen geeigneten Material bestehenden Stützrings 15 entspricht der eines T oder einer abgeschrägten L-Form, wobei die in einer Ebene, also sich diametral gegenüberliegenden beiden (kleinen) Schenkel 15a, 15b der T-Form der unmittelbaren Anlage an einem Teil des Mehrwegeventils, also entweder an der inneren (Ring) Wandung der Ventilgehäuseaussparung 11 oder an der äußeren (Ring) Wandung des Ventilkolbens 13 dienen. Das bedeutet, daß über den Träger- oder Stützring 15 der Dichtring seine stationäre Lagerung am Ventilgehäuse oder am Ventilkolben erfährt und gegenüber diesem Teil auch abdichtet (Preßsitz), während der nach außen oder nach innen in Form eines Ringvorsprungs verlaufende längere oder gegebenenfalls auch gleich lang oder auch kürzere zentrale Schenkel 15c der T-Form des Stützrings 15 der Lagerung des an erster Stelle von ihm gehaltenen und unterstützten Dichtelements 16 dient.

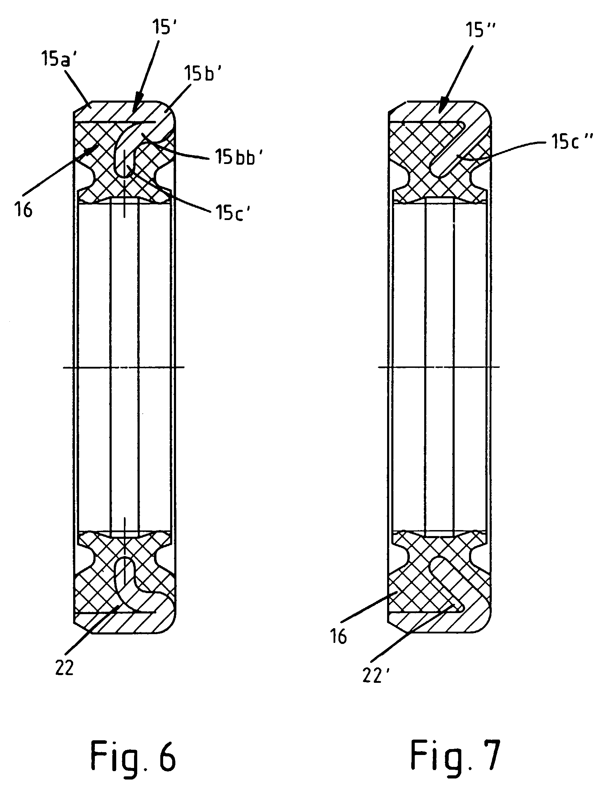

Im folgenden wird zunächst zur Vermeidung von Wiederholungen die T-Grundform des Dichtungsringaufbau wie in den Figuren 2 und 3 bzw. 4 und 5 dargestellt besprochen, bei dem also der zentrale Schenkel als innerer Ringvorsprung radial nach innen gerichtet ist, und so die gesamte Dichtringstruktur in der Ventilgehäuseaussparung 11 stationär abdichtend gelagert ist, obwohl es sich versteht, daß in entsprechender kinematischer Umkehrung mit diesen Ausführungen immer auch die andere Möglichkeit umfaßt ist, nämlich den Dichtring im Preßsitz auf der Ventilkolbenaußenfläche zu lagern, so daß der zentrale Ringvorsprung des mittleren Schenkels radial nach außen gerichtet ist - dies gilt auch für die abgeschrägte L-Grundform des starren Stützringes (Fig. 7).

Das Dichtelement sitzt auf der Grundform des T-Stützrings sozusagen rittlings (innen) auf und umfaßt den mittleren Schenkel 15c beidseitig vorzugsweise auch symmetrisch, wobei allein schon durch eine solche Konfiguration eine hinreichende Verankerung erzielt werden kann, da durch die gegenüberliegende Anlage an der Ventilkörper-Ringfläche das Dichtelement auf seinen rittlings gespreizten Sitz auf der T-Form des Stützrings gepreßt und dort auch gehalten wird.

Die bevorzugte Ausführungsform besteht allerdings darin, daß das ringförmige Dichtelement auf den zugewandten Flächen der T-Form des Stützrings einmal durch entsprechende Befestigung, beispielsweise Aufvulkanisieren, aber auch Ankleben vollkommen kraftschlüssig verbunden wird, wobei diese Verbindung oder dieses Anvulkanisieren nicht nur die beiden seitlichen äußeren Flächen des mittleren Schenkels in Form eines zentralen Ringvorsprungs betrifft, sondern auch die vordere Stirnfläche des mittleren Schenkels 15c sowie eine entsprechende Verbindung mit den ebenfalls zugewandten, zum mittleren Ringvorsprung 15c benachbarten inneren Ringflächen 17 der beiden kleineren Schenkel 15a, 15b.

Darüber hinaus oder auch allein für sich, wenn auf die soeben erwähnte stoffschlüssige Verbindung auch verzichtet wird, weist der mittlere Schenkel des Stützrings 15, vorzugsweise gleichmäßig über die Ringform verteilt, größere längliche oder auch runde Durchbrechungen 18 auf, durch welche das Material des Dichtelements beim Aufbringen und Verbinden mit dem Stützring 15 fließt, so daß das Dichtelement über die gesamte Ringform des Dichtrings gleichmäßig, sicher und formschlüssig befestigt, gehalten und gelagert ist.

Es ist soeben schon erwähnt worden, daß gegebenenfalls auf die stoffschlüssige Verbindung des Dichtelements mit den zugewandten Flächen des Stützrings auch verzichtet werden kann, beispielsweise aus Gründen einer freieren Beweglichkeit des Dichtelements am Stützring; in diesem Fall kann zweckmäßigerweise ein geeignetes Trennmittel verwendet werden beim Verbinden des beiden Teile Stützring und Dichtelement, da letzteres, um die Durchbrechungen des mittleren Schenkels zu durchsetzen, im schmelzflüssigen Zustand mit dem Stützring 15 verbunden und in die entsprechende gewünschte Form gebracht wird.

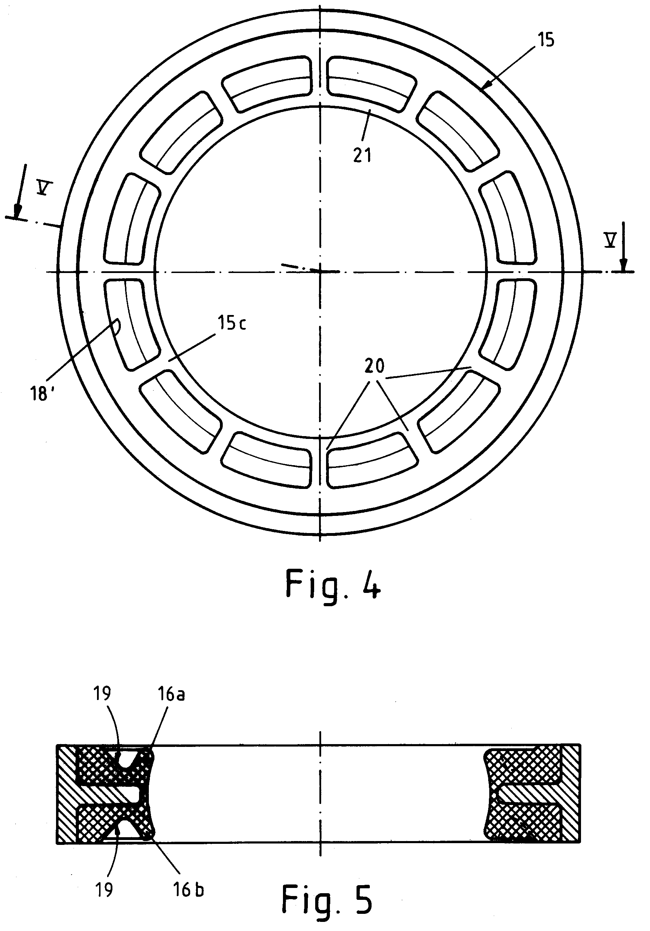

Die Form des bezüglich des Kombinationsaufbaus des Dichtrings außenliegenden Dichtelements ist grundsätzlich beliebig und kann zunächst stirnseitig nach innen ein oder mehrere Dichtlippen bilden, wobei die insbesondere aus Fig. 5 deutlich erkennbare konkave Dichtlippenform mit zwei in Richtung auf den Abdichtungsbereich stärker vorspringenden Außenrändern 16a, 16b zur Bildung von zwei Dichtlippen besonders bevorzugt ist.

In Verbindung damit können zu beiden Seiten seitlich am Dichtelement stärkere Einbuchtungen oder Einschnitte 19 gebildet sein, so daß sich eine bessere Beweglichkeit der Dichtlippenrandbereiche ergibt und an dieser Stelle auch eventuell einwirkende Druckmedien verstärkend an der Abdichtung mitwirken können.

Entsprechend Fig. 4 können die Durchbrechungen 18' im mittleren Schenkel 15c des Trägerrings 15 auch sehr stark ausgeprägt länglich rechteckförmig ausgebildet sein, so daß zwischen den Durchbrechungen nur noch schmale Reststege 20 vorhanden sind, die einen ebenfalls entsprechend schmalen inneren oder äußeren Stirnringverlauf 21 lagern. Hierdurch ergibt sich eine Verbesserung bezüglich der Elastizität des elastomeren Dichtelements, falls gewünscht.

Um die gegebenenfalls gewünschte stoffschlüssige Verbindung des Dichtelements beim Aufvulkanisieren auf den Stützring zu verbessern, können Haftvermittler verwendet werden.

Sämtliche erwähnten Ausbildungs- und Befestigungsformen des Dichtelements am Stützring gelten auch für die in den Fig. 6 und 7 dargestellten weiteren Varianten möglicher Trägerring- oder Stützringformen.

Bei der Ausführungsform der Fig. 6 ist die T-Grundform des metallischen Trägerrings 15' im wesentlichen noch beibehalten; diese Ausführungsform stellt jedoch insofern eine kostengünstigere Variante der Trägerringausbildung dar, als sie aus einem einstückigen ringförmigen Blechziehteil dadurch hergestellt ist, daß die Verlängerung eines der kurzen Schenkel 15b' auf sich selbst als einstückiger Kurzschenkelteil 15bb' zurückgeklappt ist und aus diesem zurückgeklappten Teil wiederum einstückig der mittlere, radial nach innen vorspringende Schenkel 15c' gebildet ist. Das gummielastische Dichtelement 16 paßt sich dann in seiner Form der Form des als Blechziehteil ausgebildeten Trägerrings 15' an, wobei insbesondere auch der sich verjüngende Spalt 22, der sich durch das Zurückklappen eines der kürzeren Schenkel auf sich selbst ergibt, von dem Material des Dichtelementes gut ausgefüllt wird, so daß sich hier eine zusätzliche Verankerung für diesen ergibt. Unter diesen Umständen könnte man gegebenenfalls auch auf die Durchbrechungen im mittleren Schenkel 15c' verzichtet, obwohl gerade in diesem Falle, in welchem der gesamte Trägerring 15' aus einem einstückigen Blechring (zunächst) besteht, solche Durchbrechungen besonders leicht durch Stanzen noch angebracht werden können.

Die vereinfachte Form des Trägerrings 15'' entsprechend Fig. 7 ermöglicht ebenfalls die beidseitige Umfassung des hier schräg-radial verlaufenden mittleren Schenkels 15c'', also die spezielle Umfassung dieses Schenkels durch das Dichtelement rittlings, wobei die Materialverteilung zu beiden Seiten des mittleren Schenkels 15c' allerdings unsymmetrisch bleibt.

Dieser Trägerring 15'' ist in einfacher Weise so gebildet, daß die beiden kleineren Schenkel, die hier jedoch nicht mehr einzeln auftreten, eine gemeinsame Erstreckung bilden, was allerdings auf die vorhergehenden Ausführungsformen ebenfalls zutrifft; schließlich erwächst der mittlere Schenkel aus einem Endbereich der Ringwandung des Dichtrings und ist auf der einen Seite durch schräges, nach innen gerichtetes Umklappen aus der geradlinigen Erstreckung der beiden kleineren Schenkel entstanden.

Durch diese schräg verlaufende Form des mittleren Schenkels 15c'' ergibt sich ebenfalls eine Art spitzwinklige Abknickung 22' als Ringnische, die Material des Dichtelements aufnimmt und verankert. Eine weitere Verankerung kann auch hier durch entsprechende Durchbrechungen des mittleren Schenkels 15c'' geschaffen werden.

Die Einfachheit eines solchen Dichtringes nach Struktur und Zusammensetzung läßt die durch die Erfindung erzielten Kosten- und Prozeßvorteile deutlich werden; auch der Umstand, daß überhaupt nur zwei Teile für den Aufbau des Dichtringes benötigt werden, sichert eine entsprechend lange Gebrauchsfähigkeit und Alterungsbeständigkeit.

## Patentansprüche

1. Mehrwegeventil mit mindestens einem Dichtmittel zwischen relativ zueinander beweglichen Teilen (Ventilgehäuse bzw. Ventilkolben), wobei das Dichtmittel aus einem vorzugsweise metallischen, starren Trägerring und einem einstückigen vorzugsweise elastomeren ringförmigen, am Trägerring gelagerten Dichtelement besteht, dadurch gekennzeichnet, daß der Trägerring (15, 15', 15'') einerseits die Halterung des Dichtmittels an dem Teil, an dem es stationär sitzt, sichert und andererseits je nach seiner gehäuse- oder kolbenfesten Anordnung einen radial gerade oder schräg gerichteten sich nach außen oder nach innen erstreckenden, umlaufenden Ringvorsprung aufweist und daß das Dichtelement (16) mindestens an diesem Ringvorsprung, diesen beidseitig umfassend, gehalten ist.

2. Mehrwegeventil nach Anspruch 1, dadurch gekennzeichnet, daß der metallische Trägerring (15) eine allgemeine T-Form aufweist, deren einander diametral gegenüberliegenden (kleineren) Schenkel (15a, 15b) mit ihren Außenflächen im abdichtenden Sitz stationär an einer der relativ zueinander beweglichen Teile (Ventilgehäuseaussparung 11 oder Außenflächeventilkolben 13) anliegen und ein senkrecht dazu verlaufender mittlerer Schenkel (15c) als Ringvorsprung das elastomere Dichtelement (16) lagert.

3. Mehrwegeventil nach Anspruch 1, dadurch gekennzeichnet, daß der metallische Trägerring (15') aus einem einstückigen Blechziehteil dadurch gebildet ist, daß aus einer seitlichen Verlängerung der Ringgrundform durch Umklappen auf sich selbst und anschließendem Hochbiegen nach innen oder außen ein im wesentlichen senkrecht zur Ringgrundform verlaufender mittlerer Schenkel (15c') als Ringvorsprung für die Lagerung des elastomeren Dichtelements (16) gebildet ist.

4. Mehrwegeventil nach Anspruch 1, dadurch gekennzeichnet, daß aus einem verlängerten Endbereich der Ringgrundform des metallischen Trägerrings (15') durch schräges Umklappen nach innen oder außen ein radial schräg zur Mitte weisender mittlerer Schenkel (15c'') als das elastomere Dichtelement (16) lagernder Ringvorsprung gebildet ist.

5. Mehrwegeventil nach Anspruch 3 oder 4, dadurch gekennzeichnet, daß durch das Umklappen jeweils sich verjüngende umlaufende Ringnischen zwischen der Grundringform des Trägerrings (15', 15'') und den umgeklappten Teilbereichen gebildet sind, in welche Material des Dichtelements (16) hineinfließt und die daher der Verankerung des Dichtelements dienen.

6. Mehrwegeventil nach einem der Ansprüche 1 bis 5, dadurch gekennzeichnet, daß das Dichtelement (16) rittlings symmetrisch oder unsymmetrisch den mittleren Schenkel (15c, 15c', 15c'') umgibt und an der Stirnfläche sowie den beiden Seitenflächen des mittleren Schenkels, ferner an den zugewandten inneren Ringflächen (17) der beiden gegenüberliegenden Schenkel (15a, 15b) bzw. der Ringgrundform anliegt, vorzugsweise durch Klebung oder Anvulkanisieren stoffschlüssig gehalten ist und sich um einen vorgegebenen Abstand über die Stirnfläche des mittleren Schenkels (15c), diesen daher vollständig umgebend, hinaus erstreckt unter Bildung mindestens einer Dichtlippe im Endbereich.

7. Mehrwegeventil nach einem der Ansprüche 1 bis 6, dadurch gekennzeichnet, daß der mittlere Schenkel (15c, 15c', 15c'') des metallischen Trägerrings (15, 15', 15'') vorzugsweise symmetrisch verteilte Durchbrechungen (18, 18') aufweist, die von dem Material des auf dem mittleren Schenkel (15c, 15c', 15c'') aufsitzenden Dichtelements durchsetzt sind, derart, daß das Dichtelement (16) am Trägerring formschlüssig gehalten ist.

8. Mehrwegeventil nach einem der Ansprüche 1 bis 4, dadurch gekennzeichnet, daß das Dichtelement (15) beidseitig seinen Querschnitt einschnürende Ausnehmungen (19) aufweist zur ausgeprägten Bildung konkav beidseitig vorspringender Dichtlippen-Ringbereiche (16a, 16b).
